# EUROPÄISCHE PATENTANMELDUNG

(11) **EP 2 687 721 A2**
(43) Veröffentlichungstag der Anmeldung: **22.01.2014**
(21) Anmeldenummer: 13003308.7
(22) Anmeldetag: 28.06.2013
(51) Int. Cl.: F03D 11/02, F16H 57/08

(54) **Planetenträger für ein Planetengetriebe**

(30) Priorität: 20.07.2012 DE 102012014507
(71) Anmelder: ROBERT BOSCH GMBH, 70442 Stuttgart (DE)
(72) Erfinder: Floren, Ansgar, 53757 Sankt Augustin (DE)
(74) Vertreter: Wiesmann, Stephan

(57) **Zusammenfassung**

Die Erfindung betrifft einen Planetenträger (1) für ein Planetengetriebe (2), umfassend einen Wellenflansch (3) und eine erste Planetenstegwange (4), die über im gleichen Winkelabstand zueinander angeordnete Planetenstege (5) mit einer zweiten Planetenstegwange (6) verbunden ist, wobei in den Planetenstegwangen (4, 6) jeweils mittig zwischen zwei Planetenstegen (5) sich gegenüberliegende Ausnehmungen (7, 8) zur Aufnahme eines Bolzens (9) zur Lagerung eines Planetenrads (10) ausgebildet sind, das über eine zwischen den Planetenstegwangen (4, 6) ausgebildete und in Umfangsrichtung von zwei Planetenstegen (5) begrenzte, mantelseitige Öffnung (11) des Planetenträgers (1) einsetzbar ist. Erfindungsgemäß ist zumindest eine Planetenstegwange (4, 6) über wenigstens einen Planetensteg (5) mit dem Wellenflansch (3) verbunden.

Ferner betrifft die Erfindung ein Planetengetriebe (2), insbesondere ein Strömungskraftanlagengetriebe, mit einem solchen Planetenträger (1) sowie eine Windkraftanlage (22) mit einem solchen Strömungskraftanlagengetriebe.

## Beschreibung

Die Erfindung betrifft einen Planetenträger für ein Planetengetriebe mit den Merkmalen des Oberbegriffs des Anspruchs 1. Ferner betrifft die Erfindung ein Planetengetriebe, insbesondere ein Strömungskraftanlagengetriebe, mit einem solchen Planetenträger sowie eine Windkraftanlage mit einem solchen Strömungskraftanlagengetriebe.

Ein Planetenträger der vorstehend genannten Art ist beispielsweise aus der EP 1 186 804 A1 bekannt. Der hierin beschriebene Planetenträger umfasst zwei axial zueinander beabstandete Wangen, welche über mittig eingeschnürte Stege verbunden sind. Um die gieß- und strukturmechanischen Eigenschaften zu verbessern und die Herstellungskosten zu minimieren, ist der Planetenträger als einstückiges Gussteil ausgebildet und weist Wangen auf, die seitlichen mit Abschrägungen versehen und über diese Abschrägungen mit den Enden der Stege verbunden sind. Ferner umfasst der Planetenträger einen als Hohlwelle ausgebildeten Wellenflansch, der an einer Seite einer Wange angeordnet ist.

Bei Anordnung des Wellenflansches an einer Seite einer Wange wird das Drehmoment zunächst in die mit dem Wellenflansch verbundene Wange eingeleitet und dann über die Stege auf die weitere Wange übertragen. Dabei kann es zu lastabhängigen Verformungen der Stege und/oder zu einem Versatz der beiden Wangen hinsichtlich ihrer Winkellage kommen. Die Folge kann eine Schrägstellung der Planetenräder sein, so dass es einer Modifikation der Verzahnungsauslegung bedarf.

Der vorliegenden Erfindung liegt daher die Aufgabe zugrunde, einen Planetenträger für ein Planetengetriebe anzugeben, welcher weniger anfällig im Hinblick auf lastabhängige Verformungen ist, so dass das Planetengetriebe eine erhöhte Verzahnungssicherheit aufweist.

Zur Lösung der Aufgabe wir ein Planetenträger mit den Merkmalen des Anspruchs 1 vorgeschlagen. Vorteilhafte Weiterbildungen sind in den Unteransprüchen angegeben. Ferner werden ein Planetengetriebe mit den Merkmalen des Anspruchs 10 sowie eine Windkraftanlage mit den Merkmalen des Anspruchs 12 vorgeschlagen.

Der vorgeschlagene Planetenträger umfasst einen Wellenflansch und eine erste Planetenstegwange, die über im gleichen Winkelabstand zueinander angeordnete Planetenstege mit einer zweiten Planetenstegwange verbunden ist. In den Planetenstegwangen sind dabei jeweils mittig zwischen zwei Planetenstegen sich gegenüberliegende Ausnehmungen zur Aufnahme eines Bolzens zur Lagerung eines Planetenrads ausgebildet, das über eine zwischen den Planetenstegwangen ausgebildete und in Umfangsrichtung von zwei Planetenstegen begrenzte, mantelseitige Öffnung des Planetenträgers einsetzbar ist. Erfindungsgemäß ist zumindest eine Planetenstegwange über wenigstens einen Planetensteg mit dem Wellenflansch verbunden. Das heißt, dass zumindest eine Planetenstegwange, vorzugsweise beide Planetenstegwangen, lediglich mittelbar über wenigstens einen Planetensteg mit dem Wellenflansch verbunden ist bzw. sind. Die Drehmomenteinleitung in die Wangen erfolgt demnach über wenigstens einen Planetensteg, der zwischen den Wangen angeordnet ist und demnach eine verbesserte Lastverteilung bewirkt. Dies hat zur Folge, dass die Gefahr einer Schrägstellung der Planetenräder deutlich gemindert und damit eine hohe Verzahnungssicherheit gewährleistet ist.

Bevorzugt besitzt zumindest ein Planetensteg zur Verbindung wenigstens einer Planetenstegwange mit dem Wellenflansch einen sich speichenartig nach radial innen erstreckenden Ansatz und/oder wenigstens einen stegartigen seitlichen Ansatz. Der Planetensteg weist somit eine die beiden Wangen verbindende axiale Erstreckung sowie eine radiale Erstreckung zur Verbindung der Wangen mit dem Wellenflansch auf. Sofern ein stegartiger seitlicher Ansatz vorgesehen ist, ist dieser bevorzugt radial innen liegend seitlich an den sich speichenartig nach radial innen erstreckenden Ansatz angesetzt, um den Planetensteg mit dem Wellenflansch zu verbinden. Ferner kann wenigstens ein weiterer stegartiger seitlicher Ansatz zur axialen Abstützung einer Planetenstegwange vorgesehen sein.

Weiterhin bevorzugt ist der sich speichenartig nach radial innen erstreckende Ansatz des Planetensteges axial versetzt gegenüber zumindest einer Planetenstegwange angeordnet. Vorteilhafterweise weist der speichenartige Ansatz des Planetensteges einen Axialversatz gegenüber beiden Planetenstegwangen auf. Das heißt, dass der speichenartige Ansatz des Planetensteges in axialer Richtung hinter die Planetenstegwangen zurückspringt. Auf diese Weise wird nicht nur die axiale Erstreckung des speichenartigen Ansatzes, sondern auch das Gewicht des Planetenträgers reduziert.

Vorteilhafterweise ist der sich speichenartig nach radial innen erstreckende Ansatz des Planetensteges im Wesentlichen mittig in Bezug auf die axiale Erstreckung des Planetensteges und/oder mittig zwischen den beiden Planetenstegwangen angeordnet. Das heißt, dass die Drehmomenteinleitung im Wesentlichen mittig erfolgt, so dass die Gefahr einer Verformung des Planetensteges und/oder eines Winkelversatzes der Planetenstegwangen zueinander bzw. einer Schrägstellung der Planetenräder deutlich reduziert ist. Alternativ ist aber auch eine außermittige Anordnung möglich. Es ist ebenso denkbar, dass eine außermittige Anordnung zu einem Minimum an Stegwangenverformung führt.

Gemäß einer bevorzugten Ausgestaltung der Erfindung bildet zumindest eine Planetenstegwange zur Verbindung mit einem Planetensteg einen radial außen liegenden Gurt aus, welcher sich im Bereich einer mantelseitigen Öffnung nach radial innen und/oder radial außen zur Ausbildung einer Ausnehmung zur Aufnahme eines Bolzens zur Lagerung eines Planetenrads erweitert. Die Reduzierung einer Planetenstegwange auf einen radial außen liegenden Gurt hat eine Gewichtsersparnis zur Folge. Zumindest im Bereich einer Bolzenaufnahme bedarf es jedoch einer größeren Wangenfläche, so dass der radial außen liegende Gurt hier eine Erweiterung erfährt. Die Erweiterungsfläche kann der Ausnehmung zur Aufnahme des Bolzens angepasst sein, d.h. im Wesentlichen kreisförmig gestaltet sein. Alternativ oder ergänzend wird vorgeschlagen, dass zumindest eine Planetenstegwange zur Verbindung mit einem Planetensteg einen radial außen liegenden Gurt und einen radial innen liegenden Gurt ausbildet. Die Gurte sind dabei bevorzugt konzentrisch angeordnet und/oder über im Wesentlichen radial verlaufende Stege verbunden. Die Ausbildung zweier konzentrisch zueinander liegender Gurte, welche über Stege verbunden sind, bewirkt eine höhere Steifigkeit der Planetenstegwange bei gleichzeitiger Gewichtersparnis und wirkt demnach ebenfalls einer Schrägstellung eines Planetenrads entgegen.

Als weiterbildende Maßnahme wird vorgeschlagen, dass wenigstens eine Ausnehmung zur Aufnahme eines Bolzens zur Lagerung eines Planetenrads im Bereich eines radial verlaufenden Steges, welcher einen radial außen liegenden Gurt und einen radial innen liegenden Gurt einer Planetenstegwange verbindet, angeordnet ist. Denn durch die Ausnehmung erfährt die Planetenstegwange eine Schwächung, welcher durch die erhöhte Formsteifigkeit der Planetenstegwange im Bereich eines Steges entgegen gewirkt wird. Ferner wird vorgeschlagen, dass wenigstens eine Ausnehmung zur Aufnahme eines Bolzens zur Lagerung eines Planetenrads eine Planetenstegwange vollständig durchsetzt. Die Ausnehmung erstreckt sich somit über die gesamte axiale Breite der Planetenstegwange. Dies erleichtert das Einsetzen eines Bolzens in die Ausnehmung der Planetenstegwange und damit die Montage eines Planetenrads. Vorzugsweise sind die Ausnehmungen einer Planetenstegwange als Durchgangsbohrungen ausgebildet, während die Ausnehmungen der weiteren Planetenstegwange als topfförmige Bohrungen gestaltet sind. Über den Boden einer topfförmigen Bohrung erfährt ein hierin eingesetzter Bolzen eine zusätzliche axiale Abstützung.

Zur Optimierung der Form des Planetenträgers wird des Weiteren vorgeschlagen, dass der sich speichenartig nach radial innen erstreckende Ansatz eines Planetensteges im Querschnitt eine sich nach radial innen verjüngende Außenkontur besitzt. Dadurch kann eine weitere Gewichtsreduzierung erzielt werden. Beispielsweise kann die Außenkontur zumindest abschnittsweise konkav ausgebildet sein. Vorzugsweise ist die Außenkontur dem Kräfteverlauf angepasst.

Ferner wird ein Planetengetriebe mit einem erfindungsgemäßen Planetenträger beansprucht. Der Planetenträger ist dabei vorzugsweise über wenigstens eine Lageranordnung im Planetengetriebe gelagert. Die wenigstens eine Lageranordnung ist hierzu bevorzugt gehäuseseitig ausgebildet. Beispielsweise können eine erste Lageranordnung zur Lagerung des Planetenträgers im Bereich des Wellenflansches und eine zweite Lageranordnung zur Lagerung des Planetenträgers im Bereich einer Planetenstegwange vorgesehen sein.

Bei dem Planetengetriebe kann es sich beispielsweise um ein Strömungskraftanlagengetriebe, insbesondere ein Meeresströmungskraftanlagengetriebe oder ein Windkraftanlagengetriebe handeln, das dementsprechend einen erfindungsgemäßen Planetenträger umfasst.

Weiterhin bevorzugt ist das Strömungskraftanlagengetriebe Bestandteil einer Windkraftanlage, so dass ferner eine Windkraftanlage mit einem solchen Strömungskraftanlagengetriebe beansprucht wird.

Weitere vorteilhafte Ausgestaltungen der Erfindung sind der nachfolgenden Beschreibung anhand der beigefügten Zeichnungen zu entnehmen. Diese zeigen:
- Figur 1: eine schematische Seitenansicht einer Windkraftanlage mit einem einen erfindungsgemäß ausgestalteten Planetenträger aufweisenden Generatorgetriebe,
- Figur 2: einen Längsschnitt durch das Generatorgetriebe der Windkraftanlage der Figur 1,
- Figur 3: einen Querschnitt durch den Planetenträger des Generatorgetriebes der Figur 2,
- Figur 4: eine Stirnansicht des Planetenträgers des Generatorgetriebes der Figur 2,
- Figur 5: einen Längsschnitt durch ein alternativ ausgestaltetes Generatorgetriebe einer Windkraftanlage.

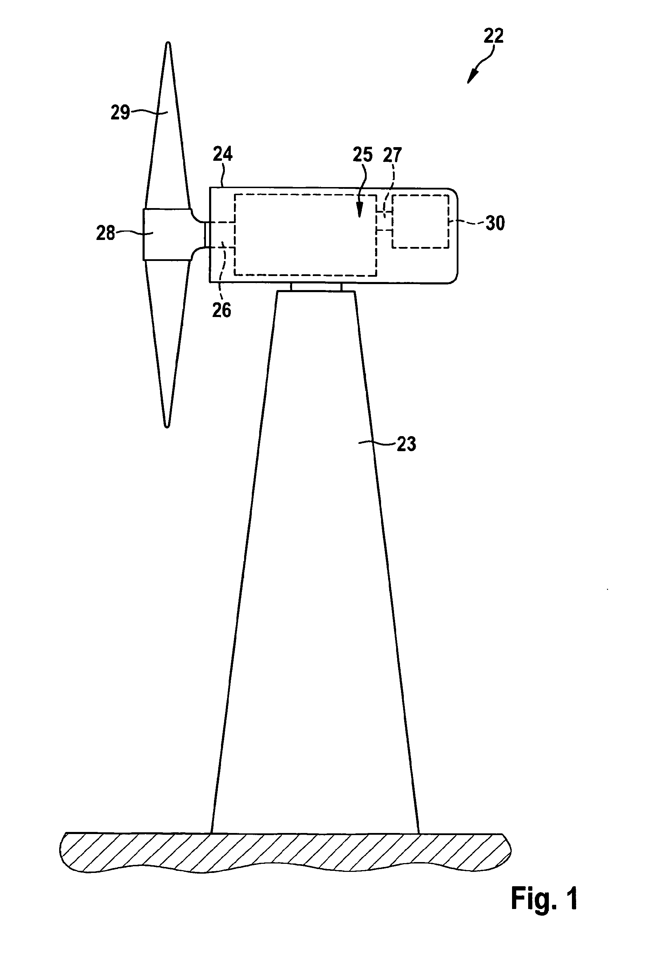

Figur 1 zeigt eine Seitenansicht einer Windkraftanlage 22 mit ihren wesentlichen Baugruppen. Die Windkraftanlage 22 weist einen Turm 23 auf, auf dem eine um eine Vertikalachse drehbar gelagerte Gondel 24 in Form eines Maschinengehäuses angeordnet ist. In der Gondel 24 ist ein Generatorgetriebe 25 drehfest befestigt, wobei das Generatorgetriebe 25 eine Antriebswelle 26 und eine Abtriebswelle 27 aufweist. Die Antriebswelle 26 des Generatorgetriebes 25 ist mit einer Nabe 28 eines mehrere Rotorblätter 29 aufweisenden Rotors verbunden. Die Abtriebswelle 27 ist mit einer anzutreibenden Antriebsvorrichtung in Form eines Generators 30 drehverbunden.

Das Generatorgetriebe 25 ist so ausgelegt, dass es eine langsame Drehbewegung der Antriebswelle 26 in eine schnelle Drehbewegung der Abtriebswelle 27 umsetzt. Dazu weist das Generatorgetriebe 25 eine oder mehrere Planetenstufen auf, die über ein abschließendes Stirnradgetriebe oder aber auch direkt mit der Abtriebswelle 27 zusammenwirken. Zumindest eine der Planetenstufen weist einen erfindungsgemäß ausgebildeten Planetenträger 1 auf, der in den nachfolgenden Figuren beschrieben wird. Das Generatorgetriebe 25 ist demnach als Planetengetriebe 2 ausgebildet bzw. umfasst ein solches.

Mittels der in der Figur 1 dargestellten Windkraftanlage 22 wird elektrische Energie erzeugt, indem der von dem Wind in Drehbewegung versetzte Rotor die auf die Antriebswelle 26 übertragene Drehbewegung in das Generatorgetriebe 25 einleitet. Das Generatorgetriebe 25 setzt die Drehbewegung in eine schnellere Drehbewegung um, welche schließlich über die Abtriebswelle 27 zur Erzeugung von Strom auf den Generator 30 übertragen wird.

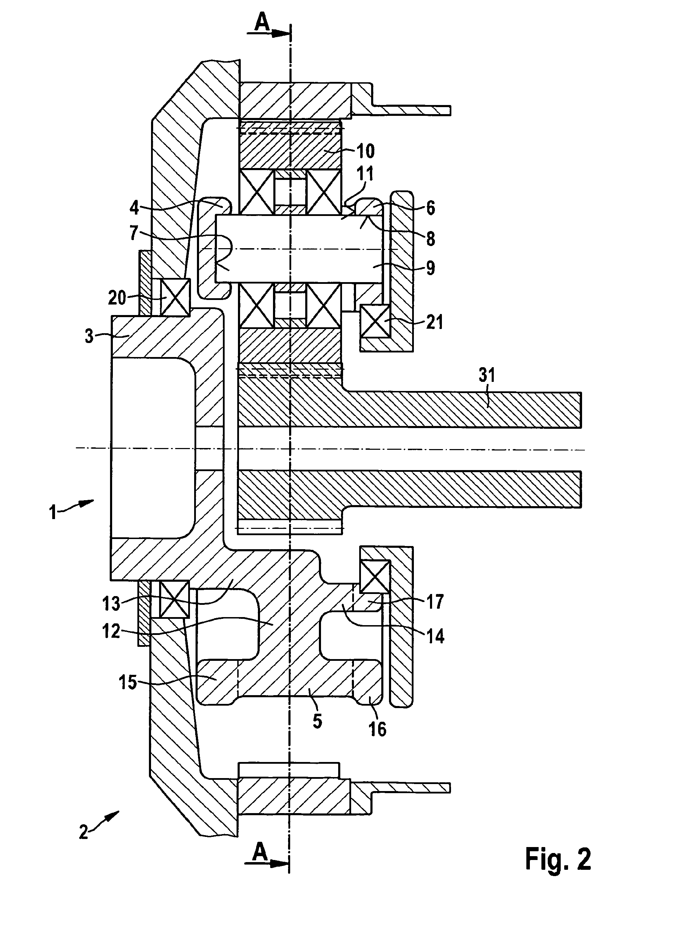

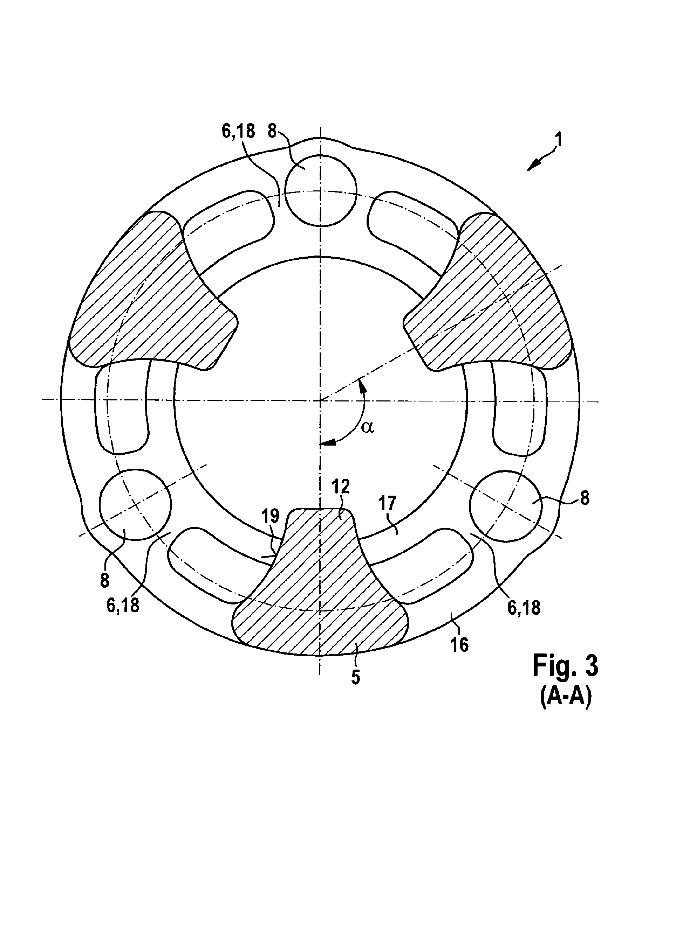

Figur 2 zeigt das Planetengetriebe 2 der in der Figur 1 dargestellten Windkraftanlage 22 in einem Längsschnitt. Das Planetengetriebe 2 weist einen erfindungsgemäßen Planetenträger 1 auf, der über eine erste und eine zweite Lageranordnung 20, 21 gehäuseseitig gelagert ist. Die erste Lageranordnung 20 ist im Bereich eines Wellenflansches 3 und die zweite Lageranordnung 21 ist im Bereich einer Planetenstegwange 6 angeordnet. Insgesamt umfasst der Planetenträger 1 zwei Planetenstegwangen 4, 6, welche axial zueinander beabstandet angeordnet und über Planetenstege 5 verbunden sind. Vorliegend sind drei in gleichem Winkelabstand zueinander liegende Planetenstege 5 vorgesehen, so dass der Winkelabstand α der Planetenstegachsen 120° beträgt (siehe Figur 3). Es ist jedoch nicht zwingend erforderlich, dass die Planetenstege 5 im gleichen Winkelabstand zueinander angeordnet sind. Ferner können mehr als drei Planetenstege 5 vorgesehen sein. Die Planetenstege 5 erstrecken sich jeweils nur über einen Teilumfangsbereich des Planetenträgers 1, so dass dieser mantelseitige Öffnungen 11 aufweist, in welche Planetenräder 10 eingesetzt sind.

Jeweils mittig zwischen zwei Planetenstegen 5 weisen die Planetenstegwangen 4, 6 einander gegenüberliegende Ausnehmungen 7, 8 zur Aufnahme von Bolzen 9 auf, welche der Lagerung der Planetenräder 10 dienen. Die Zahl der Planetenräder 10 beträgt vorliegend drei, kann aber auch mehr als drei, beispielsweise vier, fünf oder sechs betragen. Um die Montage der Planetenräder 10 zu erleichtern, sind die Ausnehmungen 8 der zweiten Planetenstegwange 6 vorliegend als Durchgangsbohrungen ausgebildet. Die in der ersten Planetenstegwange 4 vorgesehenen Ausnehmungen 7 zur Aufnahme der Bolzen 9 sind demgegenüber als topfförmige Bohrungen ausgeführt, das heißt, dass sie die erste Planetenstegwange 4 nicht vollständig durchsetzen. Dies hat den Vorteil, dass die Bolzen 9 in axialer Richtung über den Boden der topfförmigen Bohrungen eine Abstützung erfahren.

In einer zentralen Öffnung des Planetenträgers 1 ist ein Sonnenrad 31 eingesetzt, das im montierten Zustand in Zahneingriff mit den Planetenrädern 10 steht und von diesen zentriert wird. Die zentrale Öffnung befindet sich auf der dem Wellenflansch 3 abgewandten Seite des Planetenträgers 1.

Zur Verbindung der Planetenstegwangen 4, 6 mit dem Wellenflansch 3 weisen die Planetenstege 5 des Planetenträgers 1 vorliegend einen sich speichenartig nach radial innen erstreckenden Ansatz 12 auf. Die Planetenstegwangen 4, 6 sind demnach lediglich mittelbar über die Planetenstege 5 mit dem Wellenflansch 3 verbunden. Der sich speichenartig nach radial innen erstreckende Ansatz 12 ist zudem mittig zwischen den beiden Planetenstegwangen 4, 6 angeordnet, so dass die Krafteinleitung über den Wellenflansch 3 und die Planetenstege 5 ebenfalls mittig erfolgt. Alternativ kann -wie beispielhaft in der Figur 5 dargestellt - der sich speichenartig nach radial innen erstreckende Ansatz 12 auch außermittig angeordnet sein.

Da die Planetenstege 5 im Bereich des sich speichenartig nach radial innen erstreckenden Ansatzes 12 eine geringere axiale Erstreckung aufweisen, ist zur Verbindung der Planetenstege 5 mit dem Wellenflansch 3 ferner ein erster stegartiger seitlicher Ansatz 13 vorgesehen, welcher jeweils radial innen an den speichenartigen Ansatz 12 eines Planetensteges 5 angesetzt ist und sich in axialer Richtung bis an den Wellenflansch 3 heran erstreckt. Ein zweiter stegartiger seitlicher Ansatz 14 ist auf der gegenüberliegenden Seite des speichenartigen Ansatzes 12 vorgesehen und dient der axialen Abstützung der zweiten Planetenstegwange 6, welche in diesem Bereich einen radial außen liegenden Gurt 16 und einen radial innen liegenden Gurt 17 ausbildet (siehe Figur 3). Die Gurte 16, 17 sind konzentrisch, in einem radialen Abstand zueinander angeordnet, wodurch eine Gewichtsreduzierung erzielt wird. Lediglich im Bereich der Ausnehmungen 8 zur Aufnahme der Bolzen 9 werden sie durch radial verlaufende Stege 18 verstärkt.

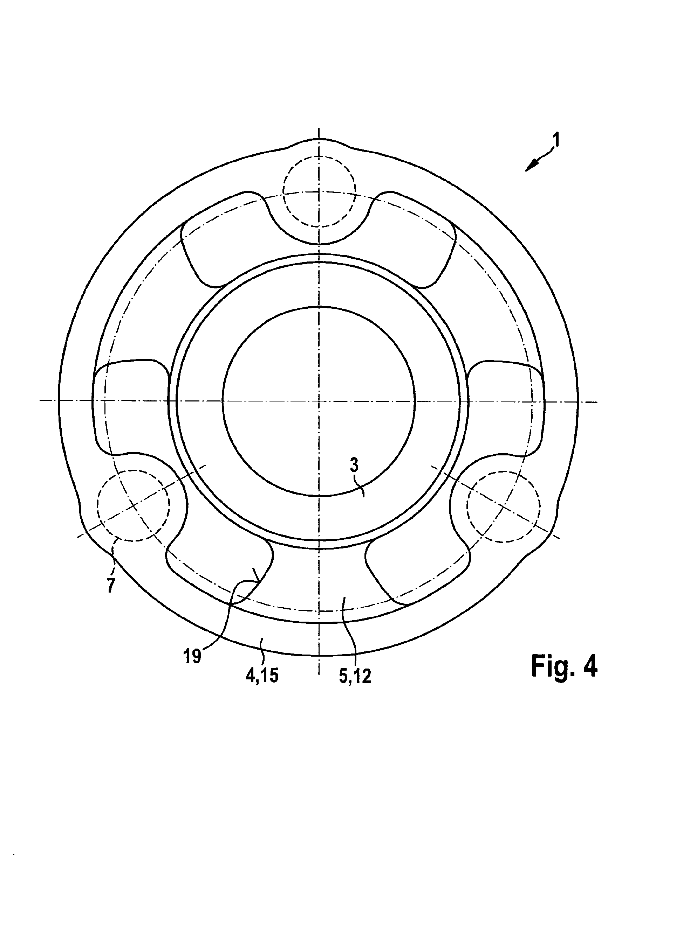

Im Unterschied zur zweiten Planetenstegwange 6 bildet die erste Planetenstegwange 4 lediglich einen radial außen liegenden Gurt 15 aus, welcher jedoch im Bereich einer Ausnehmung 7 zur Aufnahme eines Bolzens 9 eine teilkreisförmige Erweiterung in radialer Richtung erfährt. Die Erweiterung des radial außen liegenden Gurtes 15 ist somit der Form der Ausnehmung 7 angepasst (siehe Figur 4). Die Verbindung der ersten Planetenstegwange 4 mit dem Wellenflansch 3 erfolgt ausschließlich mittelbar über die Planetenstege 5.

Wie insbesondere der Figur 3 zu entnehmen ist, weisen die Planetenstege 5 eine sich nach radial innen verjüngende Außenkontur 19 auf. Die Verjüngung wird vorliegend durch konkave Abschnitte der Außenkontur 19 bewirkt. Dies ist jedoch nicht zwingend erforderlich. Des Weiteren zeigt Figur 3, dass sich die Planetenstege 5 radial innen über die zweite Planetenstegwange 6 hinaus erstrecken. Der maximale Durchmesser der zentralen Öffnung zur Aufnahme des Sonnenrades 31 wird demnach durch die Planetenstege 5 definiert (siehe auch Figur 2).

Neben den in den Figuren 2 bis 5 dargestellten bevorzugten Ausgestaltungen eines erfindungsgemäßen Planetenträgers 1 sind Abwandlungen möglich, die sich insbesondere auf die Anzahl der Planetenräder 10, die konkrete Ausgestaltung der Planetenstege 5 und/oder der Planetenstegwangen 4, 6 beziehen können. Wesentliches Merkmal der Erfindung und damit bei allen Ausgestaltungen eines erfindungsgemäßen Planetenträgers 1 anzutreffen, ist die ausschließlich mittelbare Verbindung einer Planetenstegwange 4, 6 mit dem Wellenflansch 3 über wenigstens einen Planetensteg 5, welcher somit eine speichenähnliche Funktion übernimmt und - insbesondere bei einer mittigen Anordnung des Planetensteges 5 zwischen zwei Planetenstegwangen 4, 6 - eine gleichmäßige Lasteinleitung bzw. Lastübertragung auf die Planetenstegwangen 4, 6 und damit auf die Bolzen 9 bzw. die Planetenräder 10 bewirkt. Die Gefahr einer Schrägstellung der Bolzen 9 bzw. der Planetenräder 10 unter Last kann damit deutlich verringert werden. Auf lastabhängige Verzahnungsmodifikationen kann demnach verzichtet werden, was die Auslegung der Verzahnung vereinfacht. Es ist keine oder eine zumindest deutlich verminderte Schrägungswinkelkorrektur im Zahneingriff Hohlrad-Planetenrad bzw. Planetenrad 10-Sonnenrad 31 erforderlich. Insofern kann auch eine Vollballigkeit entfallen.

### Bezugszeichenliste

- 1: Planetenträger
- 2: Planetengetriebe
- 3: Wellenflansch
- 4: erste Planetenstegwange
- 5: Planetensteg
- 6: zweite Planetenstegwange
- 7: Ausnehmung
- 8: Ausnehmung
- 9: Bolzen
- 10: Planetenrad
- 11: mantelseitige Öffnung
- 12: sich speichenartig nach radial innen erstreckender Ansatz
- 13: stegartiger seitlicher Ansatz
- 14: stegartiger seitlicher Ansatz
- 15: radial außen liegender Gurt
- 16: radial außen liegender Gurt
- 17: radial innen liegender Gurt
- 18: Steg
- 19: Außenkontur
- 20: Lageranordnung
- 21: Lageranordnung
- 22: Windkraftanlage
- 23: Turm
- 24: Gondel
- 25: Generatorgetriebe
- 26: Antriebswelle
- 27: Abtriebswelle
- 28: Nabe
- 29: Rotorblatt
- 30: Generator
- 31: Sonnenrad

## Patentansprüche

1. Planetenträger (1) für ein Planetengetriebe (2), umfassend einen Wellenflansch (3) und eine erste Planetenstegwange (4), die über im gleichen Winkelabstand zueinander angeordnete Planetenstege (5) mit einer zweiten Planetenstegwange (6) verbunden ist, wobei in den Planetenstegwangen (4, 6) jeweils mittig zwischen zwei Planetenstegen (5) sich gegenüberliegende Ausnehmungen (7, 8) zur Aufnahme eines Bolzens (9) zur Lagerung eines Planetenrads (10) ausgebildet sind, das über eine zwischen den Planetenstegwangen (4, 6) ausgebildete und in Umfangsrichtung von zwei Planetenstegen (5) begrenzte, mantelseitige Öffnung (11) des Planetenträgers (1) einsetzbar ist,
**dadurch gekennzeichnet, dass** zumindest eine Planetenstegwange (4, 6) über wenigstens einen Planetensteg (5) mit dem Wellenflansch (3) verbunden ist.

2. Planetenträger (1) nach Anspruch 1,
**dadurch gekennzeichnet, dass** zumindest ein Planetensteg (5) zur Verbindung wenigstens einer Planetenstegwange (4, 6) mit dem Wellenflansch (3) einen sich speichenartig nach radial innen erstreckenden Ansatz (12) und/oder wenigstens einen stegartigen seitlichen Ansatz (13, 14) besitzt.

3. Planetenträger (1) nach Anspruch 2,
**dadurch gekennzeichnet, dass** der sich speichenartig nach radial innen erstreckende Ansatz (12) des Planetensteges (5) axial versetzt gegenüber zumindest einer Planetenstegwange (4, 6) angeordnet ist.

4. Planetenträger (1) nach Anspruch 2 oder 3,
**dadurch gekennzeichnet, dass** der sich speichenartig nach radial innen erstreckende Ansatz (12) des Planetensteges (5) im Wesentlichen mittig in Bezug auf die axiale Erstreckung des Planetensteges (5) und/oder mittig zwischen den beiden Planetenstegwangen (4, 6) angeordnet ist.

5. Planetenträger (1) nach einem der vorhergehenden Ansprüche,
**dadurch gekennzeichnet, dass** zumindest eine Planetenstegwange (4, 6) zur Verbindung mit einem Planetensteg (5) einen radial außen liegenden Gurt (15) ausbildet, welcher sich im Bereich einer mantelseitigen Öffnung (11) nach radial innen und/oder radial außen zur Ausbildung einer Ausnehmung (7) zur Aufnahme eines Bolzens (9) zur Lagerung eines Planetenrads (10) erweitert.

6. Planetenträger (1) nach einem der vorhergehenden Ansprüche,
**dadurch gekennzeichnet, dass** zumindest eine Planetenstegwange (4, 6) zur Verbindung mit einem Planetensteg (5) einen radial außen liegenden Gurt (16) und einen radial innen liegenden Gurt (17) ausbildet, wobei vorzugsweise die Gurte (16, 17) konzentrisch angeordnet und/oder über im Wesentlichen radial verlaufende Stege (18) verbunden sind.

7. Planetenträger (1) nach Anspruch 6,
**dadurch gekennzeichnet, dass** wenigstens eine Ausnehmung (7, 8) zur Aufnahme eines Bolzens (9) zur Lagerung eines Planetenrads (10) im Bereich eines radial verlaufenden Steges (18) einer Planetenstegwange (4, 6) angeordnet ist.

8. Planetenträger (1) nach einem der vorhergehenden Ansprüche,
**dadurch gekennzeichnet, dass** wenigstens eine Ausnehmung (7, 8) zur Aufnahme eines Bolzens (9) zur Lagerung eines Planetenrads (10) eine Planetenstegwange (4, 6) vollständig durchsetzt.

9. Planetenträger (1) nach einem der Ansprüche 2 bis 8,
**dadurch gekennzeichnet, dass** der sich speichenartig nach radial innen erstreckende Ansatz (12) eines Planetensteges (5) im Querschnitt eine sich nach radial innen verjüngende Außenkontur (19) besitzt, welche vorzugsweise zumindest abschnittsweise konkav ausgebildet ist.

10. Planetengetriebe (2) mit einem Planetenträger (1) nach einem der vorhergehenden Ansprüche, wobei vorzugsweise der Planetenträger (1) über wenigstens eine Lageranordnung (20, 21) im Planetengetriebe (2) gelagert ist.

11. Strömungskraftanlagengetriebe, insbesondere Meeresströmungskraftanlagengetriebe oder Windkraftanlagengetriebe mit einem Planetenträger (1) nach einem der Ansprüche 1 bis 9.

12. Windkraftanlage (22) mit einem Strömungskraftanlagengetriebe nach Anspruch 11.
